Europäisches Patentamt

**European Patent Office**

Office européen des brevets

(19)

(11) Publication number: **0 225 413**
**B1**

(12) # EUROPEAN PATENT SPECIFICATION

(45) Date of publication of the patent specification:
22.08.90

(51) Int. Cl.⁵: **H01S 3/038**, H01S 3/041,
H01S 3/0971 5

(21) Application number: 85308956.3

(22) Date of filing: **10.12.85**

(54) Self-optimizing electrode and pulse stabilized super high power C.W. gas lasers.

(43) Date of publication of application:
16.06.87 Bulletin 87/25

(45) Publication of the grant of the patent:
22.08.90 Bulletin 90/34

(84) Designated Contracting States:
AT BE CH DE FR GB IT LI LU NL SE

(56) References cited:
DE-A- 3 335 408
US-A- 4 189 656
US-A- 4 288 758

APPLIED PHYSICS, vol. B35, no. 2, November 1984,
pages 155-162, Heidelberg, DE; D.M. ANTONIUK et al.:
"Electrode design for a magnetically stabilized glow
discharge"
PATENT ABSTRACTS OF JAPAN, vol. 7,
no. 154 (E-185)[1299], 6th July 1983 & JP-A-58-64 079
IEEE JOURNAL OF QUANTUM ELECTRONICS, vol.
QE-15, no. 1, January 1979, pages 44-50, IEEE, New
York, US; K.H. NAM et al.: "Operational characteristics
of PIE CO2 laser"

(73) Proprietor: **Nam, Kyong H., 1300 - 53A Street, South
Delta, B.C. V4M 3E6(CA)**

(72) Inventor: **Nam, Kyong H., 1300 - 53A Street, South Delta,
B.C. V4M 3E6(CA)**

(74) Representative: **Thomson, Roger Bruce et al, POLLAK
MERCER & TENCH Eastcheap House Central Approach,
Letchworth Hertfordshire SG6 3DS(GB)**

## Description

The present invention pertains to gas lasers and, more specifically, relates to an improved super high power pulse-stabilized C.W. gas laser and self-optimizing electrodes for use therein.

Up to the present time, many scientists and companies throughout the world have been attempting to develop efficient and economical super high power, continuous wave lasers for material processing. However, apparently no one seems to have achieved both objectives coincidentally, prior to the present invention. Some systems are efficient (electron-beam sustained) but not economical, while others are economical but not efficient (pulse-sustained) lasers.

The following papers provide information on earlier art. J.P. Reilly, "Pulse-Sustainer Electric Discharge Laser", J. Appl. Phys., Vol. 43, No. 8, p3411, Aug. 1972. A.E. Hill, "Continuous Uniform Excitation of Medium Pressure $CO_2$ Laser Plasma by Means of Controlled Avalanche Ionization", Appl. Phys. Lett., Vol. 22, No. 12, p670, June 1973. H.J.J. Seguin, K.H. Nam and J. Tulip, "An Efficient Multielement Cathode for High Power Electric Discharge Laser Applications" J. Appl. Phys., Vol. 49, No. 8, p4566, Aug. 1978. Kyong H. Nam, Herb J.J. Seguin and John Tulip "Operational Characteristics of a PIE $CO_2$ Laser", IEEE J. Quant. Elec., Vol. QE-15, No. 1, Jan. 1979. U.S. Pat. No. 4,288,758 issued Sept. 8, 1981.

The applicant discusses in depth in his PH.D thesis "A Kilowatt P.I.E. (Photo-initiated, Impulse-enhanced, Electrically- excited) $CO_2$ C.W. laser", which is available at the University of Alberta library and at the National Library in Ottawa, the principle of the pulse-stabilized glow discharge laser in which a laser pumping power source generates the major part of the electrons and the pulse discharge stabilizes the self-sustained glow discharge.

This pulse-stabilized glow discharge system should not be confused in its operating principle with an electron-beam-sustained system or especially with a pulse-sustained discharge system. Because the electron-beam system supplies external electrons into the discharge volume without imposing any electric field upon it, all of the supplied or produced electrons are available to the sustainer power source. Conversely, the electron-ion-pairs generated in a pulse discharge are subjected to their own electric field and a significant amount of the electrons are collected for the pulse duration (typically 250 ns.). In a typical 50 Torr (1 Torr = 133 Pa) laser gas mixture with E/N value of $2 \times 10^{-16}$ $Vcm^2$ where E is electric field intensity in V/cm., and N is particle number density in particles/$cm^3$ (in this case gas molecules), the electron drift velocity is in the neighborhood of $2 \times 10^6$ cm/s. Assuming that the discharge electrode gap is 10 cm, the pulse generated electrons will be depleted to zero within 5µs after the pulse. There are still slow moving ions in the discharge volume, but direct contribution to the sustainer current or pumping is not significant. However, during the recombination period, secondary electrons are generated by inelastic collisions. Consequently the depletion rate of the pulse affected electrons becomes smaller; yet it requires a pulse rate of more than 50 KHz, with very high pulse input power, for a stable discharge. As pulse power becomes significant, pulse discharge itself readily initiates an instability and E/N value becomes too low for efficient pumping. The optimum E/N value is 2.2 $\times 10^{-16}Vcm^2$ and this is obtainable by self-sustained glow discharge.

The complexities of the electron-beam and pulse-sustained systems are eliminated by the "pulse-stabilized glow discharge system" of this invention. In this system, a self-sustained glow discharge is obtained at much lower discharge voltage than with true self-sustained discharge. This is accomplished by superimposing low pulse repetition rate (PRR) pulses (more than an order of magnitude smaller than the required PRR for the pulse-sustained system: 1KHz - 5 KHz) on the self-sustained discharge. The pulse discharge then improves the glow discharge and extends the self-sustained glow stability as follows:

Repetitive gas conditioning is achieved by energetic electrons with an interval shorter than the time required for a uniform discharge to form localized thermal instability in the gas discharge which is about 1 ms.

The electrode surface is continuously conditioned by the repetitive electron stream leaving the cathode surface and positive ion bombardment on the cathode surface allowing more uniform discharge.

Thus, established uniform glow on the cathode surface takes a much longer time than the pulse period to collapse into a spark discharge or to terminate. Consequently, the glow persists until the next pulse. The positive ions produced by a pulse discharge move toward the cathode much more slowly through the sustained electric field and establish an electrostatic field outside the cathode surface lowering the work function significantly. Under normal laser operation, the He, $N_2$ and $CO_2$ ions take about 0.4 ms, 1.2 ms and 1.4 ms respectively to cross the 10 cm electrode gap. This indicates that some of the ions outlive the pulse period when the PRR is more than 1 KHz thus lowering the work function until the next pulse is generated. Furthermore, the positive ions produced by the glow discharge are accelerated by the pulse field and secondary emission is increased. The pulse discharge also lowers the photo electric work function by setting up quasi glow on the cathode surface.

Finally, the pulse energy ionizes much more effectively the gas under glow discharge because more electrons are available for multiplication and there are more excited atoms and molecules in the gas before onset of the pulse discharge. It should be recognized that because many excited molecules are lost by dissociation and ionization under pulse discharge, the PRR should be as low as possible.

For the reasons mentioned above, the pulse-stabilized glow discharge system works as a self-sustained discharge at substantially lower voltage than true self-sustained glow discharge. This is completely different from pulse-sustained laser operation in which the ionization is produced by the pulse discharge and laser pumping is produced by sustainer discharge.

Recently U.S. Pat. No. 4,288,758 was issued in the names of Herb. J.J. Sequin, John Tulip and Kyong H. Nam on a pulse-sustained, electrolytic ballasted, medium high power laser system. This is simpler than the electron-beam-sustained system and more efficient than the resistor ballasted, self-sustained system. However, the system and the cathode are not suitable for a super high power laser for the following reasons.

1. In order to achieve a pulse-sustained mode of operation a significant amount of pulse power or very high PRR pulses are required.

2. In the cathode the water channels are transverse to the gas flow so that there is no easy way of compensating the resistance gradient of the ballasting water (water here represents tap water or aqueous solution) caused by the water temperature gradient in its flow direction. The decreasing resistance with the increasing water temperature always starts instabilities from the water downstream side.

3. In the cathode electrode elements in the form of a row of pins transverse to the gas flow and lying in the same channel interact with the neighboring pins under electric discharge. Also, gas bubbles generated by electrolysis action add up and create non-uniformity in the gas discharge; bubbles generated under arc condition diffuse easily so that arc suppressing ability is reduced; more bubbles cross the water gap by the electroysis action causing temporal fluctuations in the current and a large amount of bubbles accumulates around the pins causing poor thermal cooling, increased ballasting loss and consequent total current reduction.

4. With solid pins there is no proper way of removing excessive heat generated in the vicinity of the cathode fall region.

5. With the pins mounted flush with the heat shielding plate, the discharge uniformity and stability are degraded as explained hereunder in describing the electrode of the invention.

6. The complication in making and mounting the clamping collars makes the cathode unit uneconomical to manufacture.

7. The seal leaks easily with minimal heating.

It is therefore an object of this invention to provide a highly efficient and economical pulse-stabilized glow discharge system for super high power gas lasers for industrial metal processing.

It is also an object of this invention to provide a better means of circulating the gas for a laser system.

It is also an object of this invention to provide an electrode which self-optimizes the discharge current uniformity by means of discretely water ballasted electrode elements.

It is also an object of this invention to provide an electrode unit which provides capacitive coupling for pulses and resistive coupling for D.C.

It is also an object of this invention to provide an electrode that enlarges the effective diameter of the electrode elements in the discharge.

It is also an object of this invention to provide an electrode which removes the heat from the cathode fall region effectively.

It is also an object of this invention to provide means of making a water ballasted electrode vacuum-tight very economically.

It is also an object of this invention to provide an electrode which eliminates problems encountered with conventional water ballasted electrodes such as water and gas down-stream effect, leaking, interactions with neighboring electrode elements, temporal spatial variations of the discharge current, excessive bubbles crossing the water gap, and impedance changes due to stationary bubbles.

Accordingly there is provided according to the invention as claimed in claim 1 an electrode assembly for a high power gas laser comprising
a plurality of elongate metal electrode elements,
a dielectric block in which said electrode elements are supported,
a heat shield plate adjacent said dielectric block,
said electrode elements extending from said dielectric block and passing through corresponding apertures in heat shield plate,
a plurality of channels in said dielectric block,
electric conductors located in the channels, the electrode elements extending into the channels and longitudinally along a portion of the walls thereof, and spaced from said electric conductors,
liquid electrolyte filling the channels and acting as ballast resistors for said electrode elements,
and means to circulate said electrolyte through said channels.

A self-sustained D.C. glow discharge system for a high power gas laser is defined in claim 27.

There is also provided according to claim 36 a method of manufacture of an electrode assembly comprising the steps of
forming the dielectric block to the required size and shape,
drilling holes from said first major face for said transverse channels,
drilling holes from one of said side faces for said main inlet and outlet channels,
drilling holes from one of said end faces for said branch inlet channels to connect with said main inlet channel and said branch inlet channels,
drilling holes from the other of said end faces for said branch outlet channels to connect with said main outlet channel and said branch outlet channels,
drilling two holes in said second major face to connect with said second main inlet and outlet channels respectively for external connections,
inserting said main busbar into one of said main channels and said sub-busbars into said corresponding branch channels, connecting said sub-busbars to said main busbar,
inserting rubber tube seals in said transverse channel holes between said first major face and said branch channels adjacent said first main face,
inserting said electrode elements through said rubber tube seals into said transverse channels,

plugging the entrances of the holes for the main and branch channels with plastic rods and rubber tube seals,

attaching sealed-in connectors for electrolyte inlet and outlet in said second major face,

attaching a sealed-in electrical plug connected to said main busbar.

Embodiments of the invention are set out in the dependent claims.

The invention will be understood from the following description taken with reference to the attached drawings, wherein

Fig. 1 is a diagrammatic view of a preferred embodiment of the pulse-stabilized laser system.

Fig. 1a is an illustration of the preferred electric connection to the electrode structures.

Fig. 2 is a graph showing V-I characteristic curves for different modes of operation.

Fig. 3 shows resistance vs. temperature curves for tap water.

Fig. 4 is a partially broken pictorial diagram of a preferred embodiment of the electrode of the invention.

Fig. 4a is a diagrammatic view of a vertical cross-section of another type of an electrode element.

Fig. 4b is a vertical sectional view of the electrode unit of Fig. 3.

Fig. 5 is a vertical sectional view of another type of electrode unit.

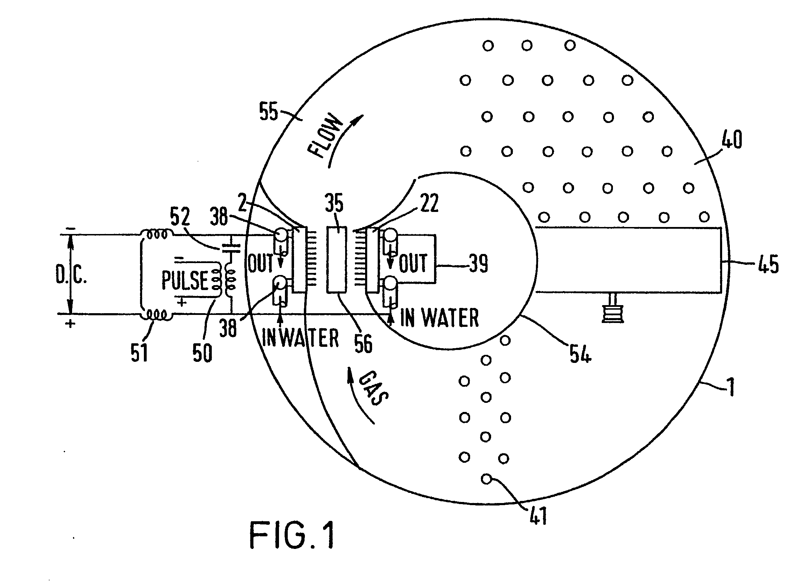

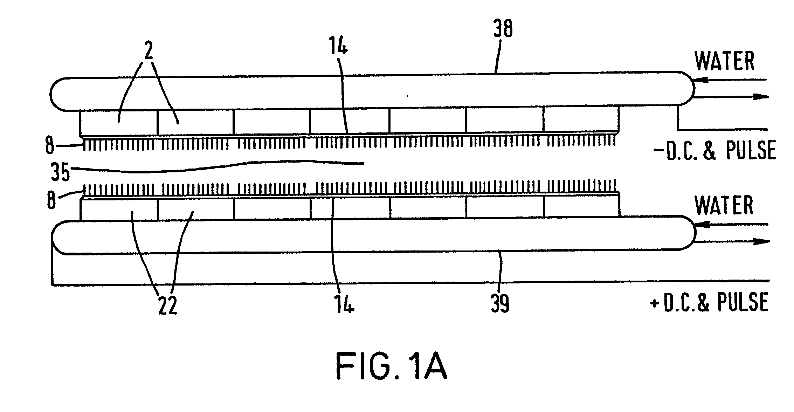

Referring to drawings, Fig. 1 shows a diagrammatic form of a preferred embodiment of a super high power, pulse-stabilized glow discharge laser system. Hermetically sealed tank 1 encloses a cathode structure 38 made to accept cathode units 2, anode structure 39 made to accept anode units 22, main heat exchanger 40, flow conditioning heat exchanger 41, axial blower 45, flow guide 54, after nozzle 55 and optic system 56 comprised of a set of mirrors located at both ends of the discharge space between the electrode units.

A natural circulation is established under electric discharge conditions by gas heating in the discharge volume 35 and gas cooling at the heat exchangers 40 and 41. This improves the blower efficiency. The flow uniformity is achieved by the long flow distance between the blower outlet and the discharge volume in cooperation with the flow conditioning heat exchanger. The expanded flow region, after nozzle 55, serves as a quenching nozzle for the stream of hot electrons by dispersing and reducing electron number density in that region.

The pulser 50 is connected to the electrode structures through the D.C. blocking capacitor 52 and a D.C. power supply is connected to the electrode structures through pulse isolation inductors 51. Both pulse and D.C. supply are floated to minimize the corona discharge to the tank so two separate inductors are needed.

As shown in Fig. 1a the electric connections should be made to the opposite ends of the respective electrode structures; negative polarity is connected to the near end of the cathode structure and positive is connected to the far end of the anode structure or vice versa. If connections are made from one end, the pulse energy takes about 15 ns to get to the other end of a 4 m long electrode structure for a 25 KW C.W. laser. This delay time is comparable to the rise time of the pulse and most of the pulse energy is dumped into the volume near to the connections and a discharge non-uniformity results.

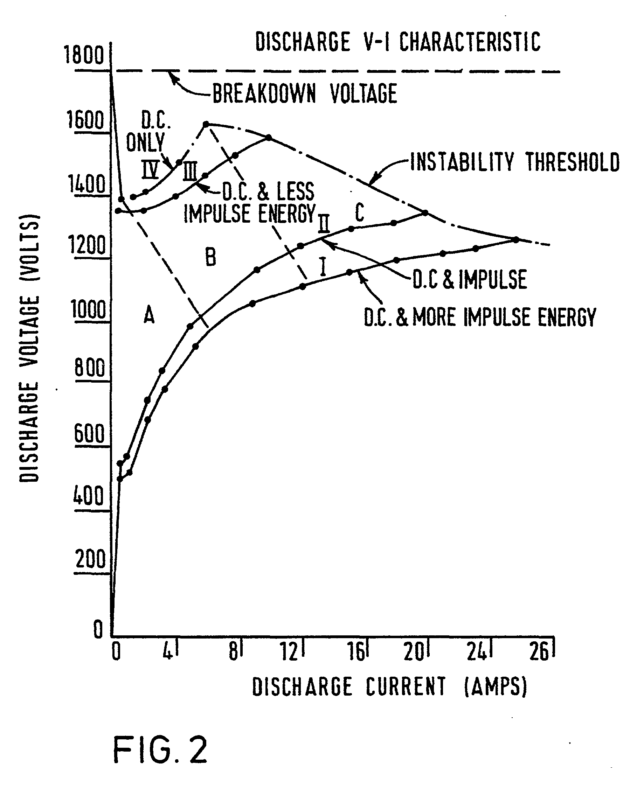

As the pulse voltage is sufficiently high for a D.C. glow discharge to be ignited, the V-I characteristic curves do not go through a Townsend breakdown process as shown in Fig. 2. The D.C. glow discharge ignited by such pulse discharge goes briefly through a quasi pulse-sustained mode, region A, in which the pulse power is at least greater than 25% of the D.C. sustainer input power. The fact that the current density continuously grows with the increasing voltage indicates the process is abnormal glow in the self-sustained glow discharge. Further discussion will be made about the abnormal glow under the electrode description. Both B & C regions are important pulse-stabilized glow discharge modes in which the sustainer discharge dominates electron generation and laser pumping. If pulse discharge is removed from region B on curve II, the sustainer discharge will end up on curve IV which is a true self-sustained glow discharge, and if it is removed from region C on curve II, the discharge will end up on the stability threshold line that is obtained by joining the maximum discharge points for different stabilization conditions. This threshold line will be pushed upward gradually with the operating time thanks to the self-optimizing characteristic of the electrode of the invention. As the threshold improves the system will work as a true self-sustained glow discharge system. However, the extended stability with greatly improved input power by a small amount of pulse power (<5% of the D.C. power) makes the pulse-stabilized glow discharge system suitable for very efficient and economical super high power lasers.

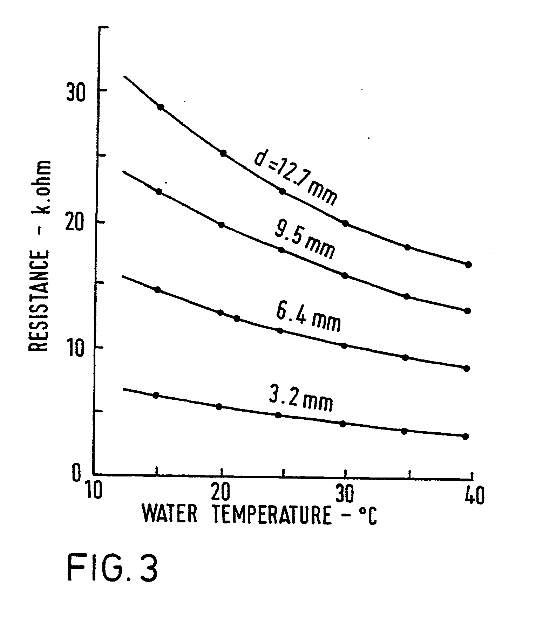

Fig. 3 shows the temperature dependent resistance of the tap water used for the electrode ballasting. This explains how the electrode elements in the water down-stream initiate instabilities, and suggests the possibility of using the temperature to control the total resistance of the electrode system.

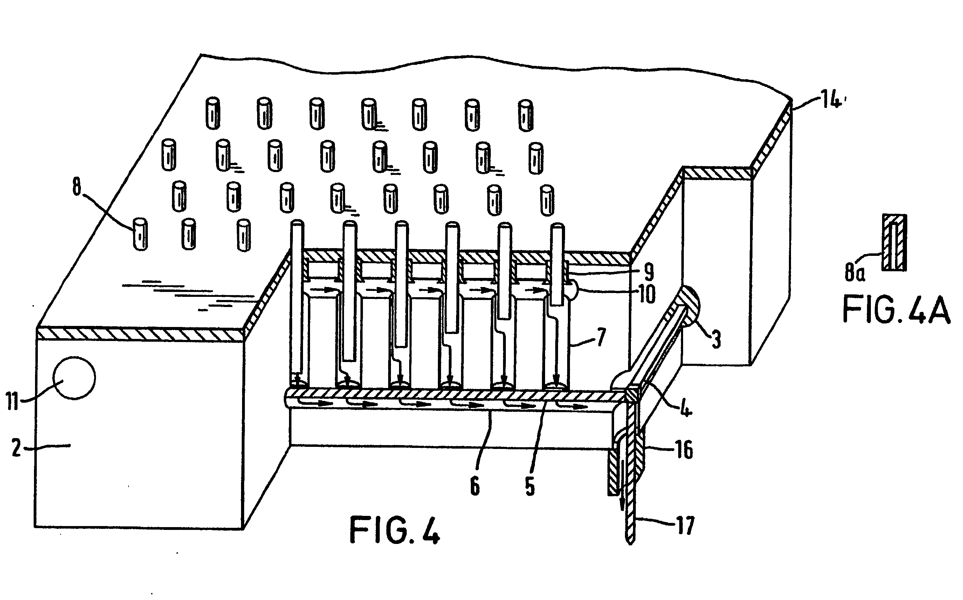

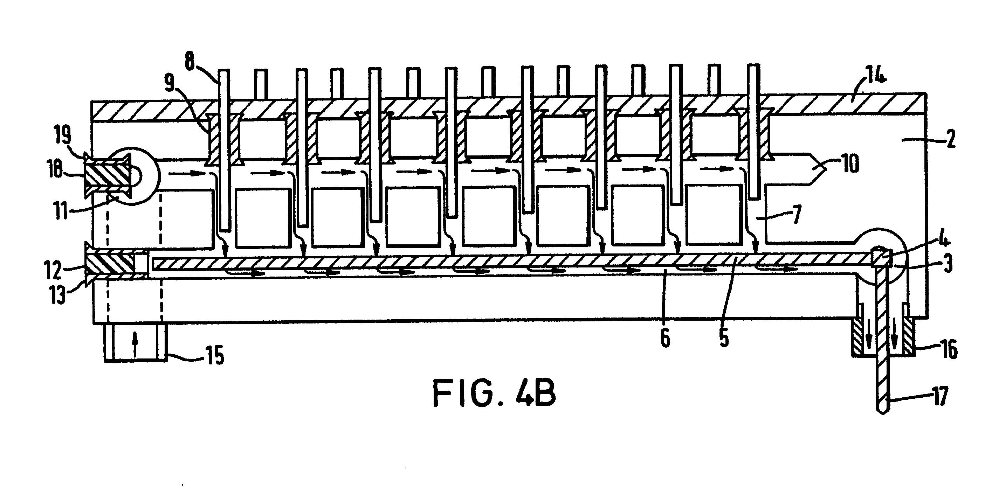

Fig. 4 shows an embodiment of the electrode of the invention for use in high power gas lasers, especially in pulse-stabilized super high power gas lasers. This electrode unit consists of a six-sided dielectric main body 2, 3-dimensional array electric distribution system comprised of a main busbar 4, sub-busbars 5, electrode elements 8, and tube seal 9, 3-dimensional array of water passages composed of a main inlet channel 11, a main outlet channel 3, branch inlet channels 10, branch outlet channels 6, and transverse channels 7, a cast heat shield 14, water outlet connector 16 and power plug-in connector 17.

A possible replacement of the solid pin, 8a, shown in Fig. 4a is a piece of tube with the upper end blocked to improve the cooling efficiency.

A cross sectional view of the electrode of Fig. 4 is shown in Fig. 4b. It shows the water inlet connector 15, and two sets of seal units 12 & 13 and 18 & 19.

All of the water passages are drilled circular holes and all of them are plugged with latex (surgical) tubes or equivalent rubber tubes and the tube inner holes are plugged with suitable materials, metal for transverse channels and dielectric material for the rest of the holes. As this sealing method simplifies the electrode manufacturing process enormously and provides an outstanding vacuum seal, this electrode is more economical than other conventional electrodes. The tube seal is held in place by a small amount of a suitable adhesive such as cyano acrylate polymer glue or the water end of the tube which is expanded and age hardened, or steps or notches in the wall of the channels.

The electrolyte employed may be an aqueous electrolytic solution containing, for example, $K_2CO_3$ or, alternatively, may be ordinary tap water. A solution containing $K_2CO_3$ in distilled water provides a very clean performance and for this reason it is preferred especially where distilled water is readily available. However, in field applications tap water may be found to be a good substitute because it is easily and economically obtainable. One disadvantage so far found with tap water is the formation of a jelly-like substance about the electrode elements after a lengthy period of operation. The initial water gap must be adjusted to be compatible with the electric conductivity of the electrolyte employed. Hereinafter, the term "water" is intended to include either an aqueous electrolytic solution or tap water unless otherwise specified.

The operation of the electrode of the invention is as follows. Water is forced from the source main (electrode structure) into a main inlet channel 11 via water inlet connector 15, distributing the water into branch inlet channels 10 which in turn distribute the water into transverse channels 7, forming discrete water resistors between electrode elements 8 and sub-busbars 5. The water and the bubbles generated under electric discharge are collected by branch outlet channels 6 and eventually voided into main outlet channel 3, which is connected to outlet main or electrode structure (38 or 39 in Fig. 1) when electrode unit 2 or 22 is used as a plug-in unit. The water passages formed as above make the amount of water flowing through each transverse channel the same because the flow impedance is the same.

The electrode element 8, plugging the inner hole of the tube seals 9, extends into the transverse channels with predetermined length for each row to compensate the gradients of plasma and water impedances in the gas flow direction; however, it should be noted that the water temperature gradient is minimized with this electrode unit.

A different design can bring the same results in compensating the impedance gradients. Instead of making the electrode element protrusions in the water different, the sub-busbars can be tilted to provide a gradual water gap increase toward the gas downstream portion of the electrode assembly.

This electrode unit can be used as a cathode, anode or cathode-anode pair. When it is used as a cathode, current distribution takes place from the power supply through the main busbar and sub-busbars. The current continues toward the electrode elements via ion-dominated carriers in the water of the transverse channels. These water resistors connected in parallel to the power source via water-metal interface distribute the current into the discharge volume in the same manner as in the conventional multi-pin electrode discharge system. If the electrode unit is used as an anode the distribution process is reversed.

These discrete water resistors have all of the advantages of their conventional counterparts and much more, so that this electrode unit is believed to be the only efficient electrode for a pulse-stabilized glow discharge system for high power lasers. Generally ion-dominated carriers exhibit a large impedance to impulse due to their low mobility and inertia. However, the discrete water resistor with water as a conducting medium acts like a small capacitor (typically about 5PF with this design) for the fast rising impulse, thus the pulse discharge becomes much more uniform with much less loss through the ballasting resistors than their conventional counterparts. Such capacitive coupling of impulse is attributed to the high dielectric constant of water. On the other hand the slow part of the impulse and D.C. potential see a resistor whose resistance decreases with the increasing temperature. This characteristic can be used to control the total resistance of this electrode system.

As heavy ions carry the current, it is expected that a sudden change in steady current due to internal or external causes will be hard to occur. Especially for the glow discharge this characteristic works very well. The discrete water resistors eliminate the bubble problems chronically encountered in the conventional water ballasted electrode. There is no electric discharge interaction among neighboring electrode elements in the water. The electrode elements are cooled effectively because the bubbles are carried away from the electrode elements by the water stream. This water flow direction reduces the amount of the bubbles crossing the water gap and consequently the temporal current fluctuation is reduced ($O_2$ accumulates around the anode in the stagnant water).

If bubbles are allowed to accumulate around electrode elements or sub-busbars as in the electrode used in the previous art it will reduce the total current gradually. If they are allowed to bunch up in the water gap then spatially varying temporal fluctuation in local current density will result. These problems are completely eliminated by the arrangement of discrete water resistors and the sub-busbar located right against the transverse channels in the branch outlet channels.

The uniformity and stability of the gas discharge with these electrode units depend partially upon the electrode elements protrusion in the discharge volume. As mentioned earlier the discharge process is mainly abnormal glow in which current density increases with the increasing discharge voltage. In the glow discharge if the cathode surface perpendicular to the bulk electric field (the electric field from cathode to anode) is used up, a transition occurs from normal glow to abnormal glow by spreading the glow onto the side and back of the cathode, or if these areas are not available then increasing the glow intensity, or both processes may occur at the same time in different degree. If the electrode elements are mounted flush with the heat shield the abnormal glow process intensifies the glow luminosity at the tips of the electrode elements. Then the localized current density increases rapidly resulting in early stage instability and discharge non-uniformity.

When the electrode elements protrude by the proper amount (4-10mm) most of the abnormal glow occurs on the side walls. As electrons are emitted perpendicularly from the surface, this glow disperses electrons into a large volume, consequently the effective diameters of the electrode elements become enlarged. Since the voltage required for intensifying the glow luminosity is larger than that required for spreading the glow, all of the properly protruded electrode elements are covered by the glow sooner or later. This effect is accentuated by the pulse discharge and the instability threshold increases and discharge or laser gain becomes very uniform. However, the protrusion cannot be too large. When there is no limit in surface area, some electrode elements produce the glow very easily while others show little or nor activity. This results in non-uniform discharge and degrades performance.

Temporally and spatially steady current obtained with the above improvements conditions the electrode unit for better performance as follows. The effective water resistance, R, is expressed by,

$$R = \frac{d}{A\sigma}$$

where d is the effective mean water gap distance, A is the effective discharge surface area and $\sigma$ is the conductivity of the water determined by carrier density, water temperature, the ballasting passage hole characteristic and the flow condition. The conductivity is assumed to be constant for the same operating condition, however, the electrode elements continuously corrode and erode away by the electrolysis action, consequently d becomes larger and A becomes smaller with operating time. Initially some electrode elements carry more current than others and corrode away faster, resulting in a more rapid rate of increase of d and decrease of A than in the other elements. Thus, for elements which initially carry higher current the resistance increases according to the above equation and the current decreases more to equalize with the other elements. Therefore the electrode unit adjusts itself to any discharge conditions and self-optimizes the current distribution with the operating time. This self-optimization is so significant that input power to the plasma improved many times the initial value with about 500 hrs. operation in some cases.

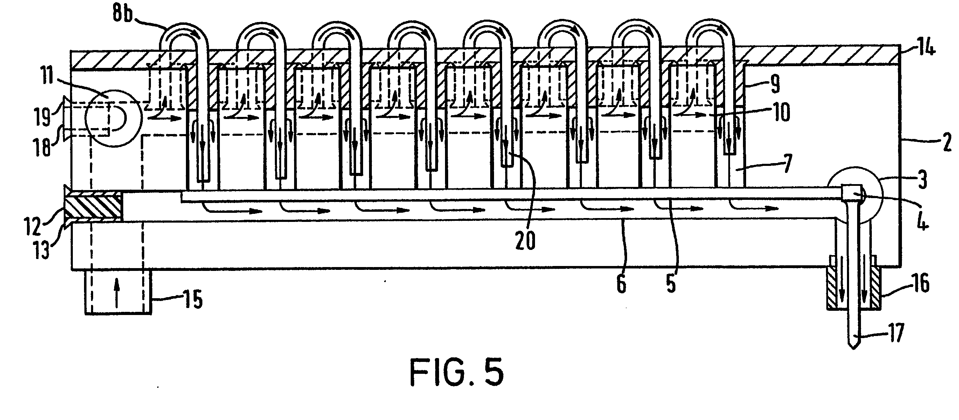

Fig. 5 shows another form of the electrode unit which provides a positive cooling means. It is similar to that of Fig. 4 in operational principle and construction except for several modifications, the electrode elements are bent tubes 8b, joining two neighboring columns, (a column is defined as a group of electrode elements arrayed in gas flow direction) to distribute water from a branch inlet channel of one column to the transverse channel of other column. The water voids into the branch outlet channels and discharges in the same manner as explained for the previous electrode unit. In some applications, the communicating grooves or holes 20 can be provided to force out any bubbles that might hang around electrode elements otherwise. The electrode elements are mounted with an angle in the gas flow direction with the water down-stream end positioned higher to facilitate the water flow. This electrode design eliminates the branch outlet channels from the odd columns and branch inlet channels from the even columns or vice versa.

In a gas discharge most of the heat is generated in the vicinity of the cathode fall region and continuous discharge may heat up the heat shield 14 and gradual gas contamination may build up. Therefore this electrode unit is more suitable for cathode application to remove the heat effectively from the cathode fall region.

The high power laser system described above may be referred to as a S.O.A.P. (Self-Optimizing, Abnormal-glow, Pulse-stabilized) laser.

The following is an exemplary method of manufacture of an electrode unit.

1. Machine or otherwise form dielectric block to size.
2. Drill holes for transverse channels (7).
3. Drill holes for inlet and outlet branch channels (10 and 6 respectively).
4. Drill holes for main inlet and outlet channels (11 and 3 respectively).
5. Drill holes for water inlet and outlet connectors.
6. Provide square stainless steel bar for the main busbar with threaded holes for location of sub-busbars.
7. Provide stainless steel rods with threaded ends for the sub-busbars.
8. Provide rubber tubing of proper size for sealing.
9. Provide electrode elements of stainless steel formed to appropriate length and shape in accordance with one of the embodiments shown in Figs. 4a, 4b and 5.

Assembly of the electrode unit may be carried out in the following sequence.

1. Place main busbar in center of main inlet or main outlet hole.
2. Thread sub-busbars into main busbar.
3. Glue in tube seals if walls not notched or stepped.
4. Push in tube seals if walls notched or stepped.
5. Push in electrode elements to give correct protrusion.
6. Plug rest of holes with plastic rods.
7. Glue or push in water inlet (15) and outlet (16) connectors according to condition of wall.

8. Thread in power plug in connector.
9. Cast heat shield (14) with a castable ceramic.

It will be understood that the described embodiments are exemplary only, and that other variations of the structure may well be possible. The invention includes all such variations as would occur to one skilled in the art and is delineated not by the preceding examples but solely by the appended claims.

## Claims

1. A self-optimizing electrode assembly for a high power gas laser comprising:

   (a) a plurality of electrical energy conducting electrode elements (8) physically and electrically separated from one another;

   (b) a heat resisting dielectric body (2) in which said electrode elements are supported, one end of said electrode elements protruding from said dielectric body;

   (c) an inlet channel (11) for transporting an aqueous solution into and through said dielectric body;

   (d) an outlet channel (3) for transporting the aqueous solution through and out of said dielectric body;

   (e) a plurality of transverse channels (7) corresponding in number with the plurality of electrode elements, each transverse channel surrounding at least a portion of its respective electrode, each channel connecting with the inlet channel and the outlet channel, each of said transverse channels isolating physically and electrically a respective end of an electrode element opposite the end of the electrode element protruding from the dielectric body;

   (f) at least one electric conductor (5) spaced from the ends of the plurality of electrode elements opposite the ends protruding from the dielectric body to form a series of gaps, the conductor being used for distributing electrical energy to the plurality of electrode elements; and

   (g) means for transporting an electrical energy conducting aqueous solution through the inlet, transverse and outlet channels.

2. An electrode assembly as claimed in claim 1 wherein said electrode elements are spacially arrayed in two directions in the dielectric body.

3. An electrode assembly as claimed in claim 2 wherein the electrode elements are arranged in the form of a grid parallel with the broad faces of the dielectric body.

4. An electrode assembly as defined in claim 1 wherein the width of the gaps between the electrode elements and conductor at the gas upstream region is less than the width of the gaps between the electrode elements and conductor at the gas downstream region.

5. An electrode assembly as defined in claim 1 wherein the electrode elements are hollow tubes, one end of each of the tubes connecting with the inlet channel, the opposite end of each of the tubes connecting with the outlet channel.

6. An electrode assembly as defined in claim 5 wherein the tubes are bent and the ends of the bent tubes connecting with the inlet channel are in one row in the dielectric body and the ends of the bent tubes connecting with the outlet channel are in a second row in the dielectric body.

7. An electrode assembly as claimed in claim 5 wherein said outlet channel is accompanied by and connected with a plurality of branch outlet channels, all of which are located substantially in a first plane, said inlet channel is accompanied by and connected with a plurality of branch inlet channels, all of which are located substantially in a second plane, the transverse channels extending between said branch inlet and said branch outlet channels, said first and second planes being tilted with respect to one another to provide a gradual water gap increase between the electrode elements and the conductor in the direction of the gas downstream portion of the electrode assembly.

8. An electrode assembly as claimed in claim 1 wherein said electrode elements are arranged in rows in one direction, in columns in a second direction, and each of said electrode elements extending in a third direction to form thereby a 3-dimensional array.

9. An electrode assembly as claimed in any one of claims 1, 2 or 3 wherein said electrode elements are rods.

10. An electrode assembly as claimed in any one of claims 1, 2 or 3 wherein said electrode elements are tubes with closed protruding ends.

11. An electrode assembly as claimed in any one of claims 1, 2 or 3 wherein said electrode elements are open-ended tubes, each of the ends of each tube being connected to one of said channels whereby a portion of said electrolyte circulates through said tubes.

12. An electrode assembly as claimed in claim 1 wherein said channels comprise:

   (a) a main inlet channel and a main outlet channel;

   (b) a plurality of branch inlet channels; and

   (c) a corresponding plurality of branch outlet channels connected to said main inlet and main outlet channels respectively, a plurality of transverse channels connected between each branch inlet channel and the corresponding branch outlet channel, there being a transverse channel corresponding to each electrode element, and a portion of each of said electrode elements being located in the corresponding transverse channel and being so located with respect to one of said electrical conductors as to provide therebetween a gap of predetermined width whereby the electrolyte provides requisite ballasting resistance for each electrode element.

13. An electrode assembly as claimed in claim 12 wherein said electrical conductors comprise a main busbar extending longitudinally within said main outlet channel and a plurality of sub-busbars, electrically connected to said main busbar, corresponding in number to said plurality of branch outlet channels and extending longitudinally therewithin, each of said electrode elements being so located with respect to one of said sub-busbars as to produce therebetween one of said gaps.

14. An electrode assembly as claimed in claim 13 wherein each electrode element extends transversely through one of said branch inlet channels and thereacross into one of said transverse channels.

15. An electrode assembly as claimed in claim 12 wherein said electrical conductors comprise a main busbar extending longitudinally within said main inlet channel and a plurality of sub-busbars, electrically connected to said main busbar, corresponding in number to said plurality of branch inlet channels and extending longitudinally therewithin, each of said electrode elements being so located with respect to one of said sub-busbars as to produce therebetween one of said gaps.

16. An electrode assembly as claimed in claim 15 wherein each electrode element extends tranversely through one of said branch outlet channels and thereacross into one of said transverse channels.

17. An electrode assembly as claimed in claim 13 wherein the widths of said gaps increase from the gas upstream ends of said sub-busbars to the downstream ends thereof.

18. An electrode assembly as claimed in any one of claims 12, 13 or 14 wherein each of said electrode elements is positioned in relation to the corresponding sub-busbar as to provide a gap of predetermined resistance.

19. An electrode assembly as claimed in any one of claims 12, 13 or 14 wherein the transverse channels are arranged so that electrolyte flow rate through each is substantially the same.

20. An electrode assembly as claimed in any one of claims 1, 2 or 3 wherein said electrolyte is an aqueous solution containing potassium carbonate.

21. An electrode assembly as claimed in any one of claims 12, 13 or 14 wherein said electrolyte is an aqueous solution containing potassium carbonate.

22. An electrode assembly as claimed in any one of claims 1, 2 or 3 wherein said electrolyte is tap water.

23. An electrode assembly as claimed in any one of claims 12, 13 or 14 wherein said electrolyte is tap water.

24. An electrode assembly as claimed in any one of claims 1, 2 or 3 wherein said electrode elements protrude above a heat shield plate a distance in the range 4 to 10 mm.

25. An electrode assembly as claimed in any one of claims 12, 13 or 14 wherein said electrode elements protrude above a heat shield plate a distance in the range 4 to 10 mm.

26. An electrode assembly as claimed in any one of claims 12, 13 or 14 wherein the direction of flow of the electrolyte in the vicinity of the electrode elements is such that bubbles formed at the electrode elements at the ends opposite the protruding ends are carried away to the outlet channel.

27. A self-sustained D.C. glow discharge system for a high power gas laser comprising:
a cathode electrode (2) and an anode (22) electrode, at least one of said cathode and said anode electrodes being an electrode assembly including

(a) a plurality of electrical energy conducting electrode elements (8) physically and electrically separated from one another;

(b) a heat resisting dielectric body (2) in which said electrode elements are supported, one end of said electrode elements protruding from said dielectric body;

(c) an inlet channel (11) for transporting an aqueous solution into and through said dielectric body;

(d) an outlet channel (3) for transporting the aqueous solution through and out of said dielectric body;

(e) a plurality of transverse channels (7) corresponding in number with the plurality of electrode elements, each transverse channel surrounding at least a portion of its respective electrode, each channel connecting with the inlet channel and the outlet channel each of said transverse channels isolating physically and electrically a respective end of an electrode element opposite the end of the electrode element protruding from the dielectric body;

(f) at least one electric conductor (5) spaced from the ends of the plurality of electrode elements opposite the ends protruding from the dielectric body to form a series of gaps, the conductor being used for distributing electrical energy to the plurality of electrode elements; and

(g) means for transporting an electrical energy conducting aqueous solution through the inlet, transverse and outlet channels
said anode and cathode electrodes extending in spaced relationship to one another to define therebetween a discharge volume (35),
means (45, 54, 55) for producing a continuous flow of a gas suitable for laser action through said discharge volume,
an optic system (56) including a set of mirrors located at both ends of said discharge volume,
means for initiating and stabilizing the glow discharge in said volume,
a sustainer D.C. supply having positive and negative output terminals,
a pair of pulse isolation inductors (51), one of the pulse isolation inductors being electrically connected between the positive terminal of the D.C. supply and the anode, the other pulse isolation inductor being electrically connected between the negative terminal of the D.C. supply and the cathode.
a capacitor (52) electrically connected between one of the output terminals of a pulser (50) of said system and one of said electrodes, the second output terminal of the pulser being electrically connected to the other of said electrodes.

28. A self-sustained glow discharge system as claimed in claim 27 wherein the pulse repetition rate of the pulser is in the range 1 to 5KHz.

29. A self-sustained glow discharge system as claimed in claim 27 wherein the gas is $CO_2$ laser mixture.

30. A self-sustained glow discharge system as claimed in any one of claims 27, 28 or 29 wherein an expansion chamber is located on the downstream side of the discharge volume to suppress the streamer of electrons.

31. A self-sustained glow discharge system as claimed in claim 27 wherein said electrode elements protrude beyond a heat shield into the discharge volume.

32. A self-sustained glow discharge system as claimed in any one of claims 27, 29 or 31 wherein said electrode elements are open-ended tubes, both ends of each tube being connected to one of said channels whereby a portion of said electrolyte circulates through said tubes.

33. An electrode assembly as claimed in claim 13 wherein said dielectric block is a parallel-piped having first and second major faces and a pair of end faces and a pair of side faces joining the major faces, the electrode ends protruding through the first major face, a heat shield plate being located adjacent said first major face, said electrode elements extending from within said dielectric block and through the heat shield.

34. An electrode assembly as claimed in claim 33 wherein said main outlet channel and said plurality of branch outlet channels are located adjacent and substantially parallel to one of said major faces, said main inlet and said plurality of branch inlet channels are located adjacent and substantially parallel to the other of said major faces, and said transverse channels extend between said branch inlet and said branch outlet channels substantially perpendicular to said major faces whereby a 3-dimensional array of water channels is provided.

35. An electrode assembly as claimed in claim 12 wherein said main outlet channel and said plurality of branch outlet channels are located substantially in a first plane, said main inlet and said plurality of branch inlet channels are located substantially in a second plane, said transverse channels extend between said branch inlet and said branch outlet channels, said first and second planes are slightly tilted with respect to one another to provide a gradual water gap increase between the electrode elements and the sub-busbars toward the gas downstream portion of said electrode assembly.

36. A method of manufacture of an electrode assembly as claimed in claim 33 comprising the steps of:
forming the dielectric block (2) to the required size and shape;
drilling holes from said first major face for said transverse channels (7);
drilling holes from one of said side faces for said main inlet (11) and outlet (3) channels;
drilling holes from one of said end faces for said branch inlet channels (10) to connect with said main inlet channel and said transverse channels;
drilling holes from the other of said end faces for said branch outlet (6) channels to connect with said main outlet channel and said transverse channels;
drilling two holes in said major face to connect with said second main inlet and outlet channels respectively for external connections;
inserting said main busbar (4) into one of said main channels and said sub-busbars (5) into said corresponding branch channels (6), connecting said sub-busbars to said main busbar, inserting rubber tube seals (9) in said transverse channel holes between said first major face and said branch channels adjacent said first main face;

inserting said electrode elements (8) through said rubber tube seals into said transverse channels;
plugging the entrances of the holes for the main and branch channels with plastic rods (12, 18) and rubber tube seals (13, 19);
attaching sealed-in connectors (15, 16) for electrolyte inlet and outlet in said second major face; and
attaching a sealed-in electrical plug (17) connected to said main busbar.

37. A method as claimed in claim 36 wherein said rubber tube seals are held in place by a suitable sealant or step or notch.

38. An electrode assembly as claimed in claim 1 wherein said electrode elements and said electric conductors are composed of stainless steel.

**Patentansprüche**

1. Eine selbstoptimierende Elektroden-Anordnung für einen Hochleistungs-Gaslaser, enthaltend:
(a) eine Vielzahl von elektrische Energie leitenden Elektroden-Elementen (8), die körperlich und elektrisch voneinander getrennt sind;
(b) ein hitzebeständiger dielektrischer Körper (2), in welchem die erwähnten Elektroden-Elemente gelagert sind, wobei das eine Ende der Elektroden-Elemente aus dem erwähnten dielektrischen Körper herausragt;
(c) einen Einlaßkanal (11) zum Transport einer wässerigen Lösung in und durch den erwähnten dielektrischen Körper; (d) einen Auslaß-Kanal (3) zum Transport der wässerigen Lösung durch den erwähnten dielektrischen Körper und aus ihm heraus;
(e) eine Vielzahl von zahlenmäßig der Anzahl der Elektroden-Elemente entsprechenden Querkanälen (7), die wenigstens einen Teil ihrer zugehörigen Elektrode umgeben, wobei jeder Kanal mit dem Einlaß- und dem Auslaßkanal verbunden ist und jeder Querkanal körperlich und elektrisch dasjenige Ende des Elektroden-Elements trennt, das dessen anderem, aus dem dielektrischen Körper vorstehenden Ende gegenüberliegt;
(f) wenigstens einen elektrischen Leiter (5), der von den den aus dem dielektrischen Körper herausragenden Enden gegenüberliegenden Enden der Elektroden-Elemente getrennt ist und damit eine Reihe von Abständen bildet, wobei der Leiter zur Verteilung der elektrischen Energie auf die Vielzahl der Elektroden-Elemente dient; und
(g) Mittel zum Transportieren einer elektrische Energie leitenden wässerigen Lösung durch die Einlaß-, Quer- und Auslaßkanäle.

2. Elektroden-Anordnung nach Anspruch 1, wobei die erwähnten Elektroden-Elemente mit Abständen in zwei Richtungen im dielektrischen Körper angeordnet sind.

3. Elektroden-Anordnung nach Anspruch 2, wobei die Elektroden-Elemente in Form eines parallel zu den breiten Außenflächen des dielektrischen Körpers verlaufenden Gitters angeordnet sind.

4. Elektroden-Anordnung nach Anspruch 1, wobei die Größe der Abstände zwischen den Elektroden-Elementen und dem Stromleiter in der Gas-Anströmregion geringer ist als die Weite der Abstände zwischen den Elektroden-Elementen und dem Stromleiter in der Gas-Ausströmregion.

5. Elektroden-Anordnung nach Anspruch 1, wobei die Elektroden-Elemente als Hohlröhren ausgebildet sind, deren eines Ende mit dem Einlaßkanal und deren anderes Ende mit dem Auslaßkanal in Verbindung steht.

6. Elektroden-Anordnung nach Anspruch 5, wobei die Röhren gebogen sind und ihre mit dem Einlaßkanal verbundenen Enden in einer Reihe des dielektrischen Körpers und die mit dem Auslaßkanal verbundenen anderen Enden in einer zweiten Reihe des dielektrischen Körpers liegen.

7. Elektroden-Anordnung nach Anspruch 5, wobei der erwähnte Auslaßkanal begleitet und verbunden ist mit einer Mehrzahl von verzweigten Auslaßkanälen, die alle im wesentlichen in einer ersten Ebene angeordnet sind, während der erwähnte Einlaßkanal begleitet und verbunden ist mit einer Mehrzahl von verzweigten Einlaßkanälen, die alle im wesentlichen in einer zweiten Ebene angeordnet sind, wobei die Querkanäle sich zwischen den verzweigten Einlaß- und verzweigten Auslaßkanälen erstrecken, und wobei die ersten und zweiten Ebenen zueinander geneigt sein können, um eine graduierliche Zunahme der Wasser-Abstände zwischen den Elektroden-Elementen und den Stromleitern in Richtung des gasabstromseitig gelegenen Teils der Elektroden-Anordnung zu ermöglichen.

8. Elektroden-Anordnung nach Anspruch 1, wobei die erwähnten Elektroden-Elemente in Reihen in einer Richtung angeordnet sind, in Spalten in einer zweiten Richtung, und wobei jedes der erwähnten Elektroden-Elemente sich in einer dritten Richtung erstreckt, um dadurch eine dreidimensionale Anordnung zu bilden.

g. Elektroden-Anordnung nach einem der Ansprüche 1, 2 oder 3, wobei die Elektroden-Elemente Stangenform besitzen.

10. Elektroden-Anordnung nach einem der Ansprüche 1, 2 oder 3, wobei die erwähnten Elektroden-Elemente Röhren sind, die an ihren vorspringenden Enden geschlossen sind.

11. Elektroden-Anordnung nach einem der Ansprüche 1, 2 oder 3, wobei die erwähnten Elektroden-Elemente an beiden Enden offene Röhren sind, deren beide Enden mit den Kanälen verbunden sind, wodurch ein Teil des erwähnten Elektrolyten durch die erwähnten Röhren fließt.

12. Elektroden-Anordnung nach Anspruch 1, wobei die erwähnten Kanäle umfassen:

(a) einen Haupt-Einlaßkanal und einen Haupt-Auslaßkanal;

(b) eine Vielzahl von verzweigten Einlaßkanälen; und

(c) eine entsprechende Vielzahl von verzweigten Auslaßkanälen, die mit dem erwähnten Haupt-Einlaß- und Haupt-Auslaßkanal entsprechend verbunden sind, weiterhin eine Vielzahl von Querkanälen, die mit jedem verzweigten Einlaßkanal und dem zugehörigen verzweigten Auslaßkanal verbunden sind, wobei je ein Querkanal zu einem Elektroden-Element gehört und ein Teil jedes dieser Elektroden-Elemente in dem zugehörigen Querkanal angeordnet ist sowie in Bezug auf einen der elektrischen Stromleiter so liegt, daß zwischen ihnen ein Abstand von vorbestimmter Weite vorhanden ist, wodurch der Elektrolyt für jedes Elektroden-Element einen entsprechenden Ballast-Widerstand bildet.

13. Elektroden-Anordnung nach Anspruch 12, wobei die elektrischen Stromleiter eine sich durch den erwähnten Auslaßkanal erstreckende Haupt-Sammelschiene und eine Vielzahl von damit elektrisch verbundenen Neben-Sammelschienen umfassen, die zahlenmäßig der Anzahl der verzweigten Auslaßkanäle entsprechen und sich darin erstrecken, wobei jedes der Elektroden-Elemente im Bezug auf eine der erwähnten Neben-Sammelschienen so angeordnet ist, daß es mit ihr den erwähnten Abstand bildet.

14. Elektroden-Anordnung nach Anspruch 13, wobei jedes Elektroden-Element sich quer durch einen der erwähnten verzweigten Einlaßkanäle und darin hindurch in einen der erwähnten Querkanäle erstreckt.

15. Elektroden-Anordnung nach Anspruch 12, wobei die elektrischen Stromleiter eine sich innerhalb des erwähnten Haupt-Einlaßkanals erstreckende Haupt-Sammelschiene sowie eine Mehrzahl von Neben-Sammelschienen umfassen, die elektrisch mit der erwähnten Haupt-Sammelschiene verbunden sind und zahlenmäßig der Mehrzahl der verzweigten Einlaßkanäle entsprechen und sich darin längs erstrecken, wobei jedes der Elektroden-Elemente in Bezug auf eine der erwähnten Neben-Sammelschienen so liegt, daß sie damit den erwähnten Abstand besitzt.

16. Elektroden-Anordnung nach Anspruch 15, wobei jedes Elektroden-Element sich quer durch einen der erwähnten verzweigten Auslaßkanäle und durch diesen hindurch in einen der erwähnten Querkanäle erstreckt.

17. Elektroden-Anordnung nach Anspruch 13, wobei die Weite der erwähnten Abstände von den Gas-Anströmenden der erwähnten Neben-Sammelschienen zu den Ausströmenden hin zunimmt.

18. Elektroden-Anordnung nach einem der Ansprüche 12, 13 oder 14, wobei jedes der erwähnten Elektroden-Elemente in Bezug auf die entsprechende Neben-Sammelschiene so angeordnet ist, daß es dazu einen einem vorbestimmten Widerstand entsprechenden Abstand besitzt.

19. Elektroden-Anordnung nach einem der Ansprüche 12, 13 oder 14, wobei die Querkanäle so angeordnet sind, daß die Durchströmungsmenge des Elektrolyten durch jeden von ihnen im wesentlichen gleich ist.

20. Elektroden-Anordnung nach einem der Ansprüche 1, 2 oder 3, wobei der erwähnte Elektrolyt eine wässerige Lösung ist, die Kaliumcarbonat enthält.

21. Elektroden-Anordnung nach einem der Ansprüche 12, 13 oder 14, wobei der erwähnte Elektrolyt eine wässerige Lösung ist, die Kaliumcarbonat enthält.

22. Elektroden-Anordnung nach einem der Ansprüche 1, 2 oder 3, wobei der erwähnte Elektrolyt Leitungswasser ist.

23. Elektroden-Anordnung nach einem der Ansprüche 12, 13 oder 14, wobei der erwähnte Elektrolyt Leitungswasser ist.

24. Elektroden-Anordnung nach einem der Ansprüche 1, 2 oder 3, wobei die erwähnten Elektroden-Elemente über ein Hitzeschutzschild im Umfang von 4 bis 10 mm vorstehen.

25. Elektroden-Anordnung nach einem der Ansprüche 12, 13 oder 14, wobei die erwähnten Elektroden-Elemente über ein Hitzeschutzschild im Umfang von 4 bis 10 mm hinausragen.

26. Elektroden-Anordnung nach einem der Ansprüche 12, 13 oder 14, wobei die Flußrichtung des Elektrolyten in der Nähe der Elektroden-Elemente so gewählt ist, daß die an deren den vorstehenden Enden gegenüberliegenden Enden etwa entstehenden Gasblasen zum Auslaßkanal fortgetragen werden.

27. Ein sich selbst unterhaltendes Gleichstrom-Glimmentladungssystem für einen Hochleistungs-Gaslaser, enthaltend:
eine kathodische Elektrode (2) und eine anodische Elektrode (22), von denen wenigstens eine kathodische und anodische Elektrode eine Elektrodenanordnung bilden, die einschließt

(a) eine Mehrzahl von elektrische Energie führenden Elektroden-Anordnungen (8), die körperlich und elektrisch voneinander getrennt sind;

(b) einen hitzebeständigen dielektrischen Körper (2), in welchem die erwähnten Elektroden-Elemente gelagert sind, deren eines Ende aus dem erwähnten dielektrischen Körper herausragt:

(c) einen Einlaßkanal (11) zum Transportieren einer wässerigen Lösung in und durch den erwähnten dielektrischen Körper;

(d) einen Auslaßkanal (3) zum Transportieren der wässerigen Lösung durch und aus dem erwähnten dielektrischen Körper heraus;

(e) eine Mehrzahl von Querkanälen (7), die anzahlmäßig der Mehrzahl der Elektroden-Elemente entspricht und wenigstens einen Teil der zugehörigen Elektrode umgibt, wobei jeder Kanal mit dem Einlaß- und dem Auslaßkanal verbunden ist und jeder Querkanal körperlich und elektrisch das zugehörige Ende eines Elektroden-Elements abtrennend umgibt, das dem aus dem dielektrischen Körper herausragenden Ende des Elektroden-Elements gegenüberliegt;

(f) wenigstens einen elektrischer Stromleiter (5), der mit Abstand von den Enden der Vielzahl der Elektroden-Elemente angeordnet ist, die den aus dem dielektrischen Körper herausragenden Enden gegenüberliegen, und der mit den ersterwähnten Enden eine Reihe von Abständen einschließt, wobei der Stromleiter zur Verteilung der elektrischen Energie auf die Vielzahl der Elektroden-Elemente dient; und

(g) Mittel zum Transportieren einer elektrische Energie leitenden wässerigen Lösung durch die Einlaß-, Quer- und Auslaßkanäle,
wobei die erwähnten anodischen und kathodischen Elektroden sich in einem solchen Abstand voneinander erstrecken, daß sie dadurch einen Entladeraum (35) definieren,
wobei weiterhin Mittel (45, 54, 55) vorgesehen sind, um einen kontinuierlichen Gasstrom für die Laser-Wirkung durch diesen Entladeraum zu erzeugen,
weiterhin ein optisches System (56) vorhanden ist, das einen Satz von zwischen den beiden Enden des erwähnten Entladeraums gelegenen Spiegeln umfaßt,
Mittel zum Einleiten und Stabilisieren der Glimmentladung in dem erwähnten Raum,
eine ununterbrochen arbeitende Gleichstrom-Spannungsquelle mit positiven und negativen Anschlußenden,
ein Paar von impulstrennenden Induktionsspulen (51), von denen eine elektrisch mit dem positiven Pol der Gleichstromversorgungsquelle und der Anode verbunden ist, während die andere impulstrennende Induktionsspule mit dem negativen Pol der Gleichstrom-Spannungsquelle und der Kathode verbunden ist,
ein mit den Auslaßanschlüssen eines Impulsgebers (50) des erwähnten Systems und einem der erwähnten Elektroden elektrisch verbundenen Kondensator (52), wobei der andere Anschluß des Impulsgebers elektrisch mit der anderen der erwähnten Elektroden verbunden ist.

28. Selbstunterhaltendes Glimmentladungssystem nach Anspruch 27, wobei die Pulsfolgefrequenz des Impulsgebers im Bereich zwischen 1 bis 5 kHz liegt.

29. Selbstunterhaltendes Glimmentladungssystem nach Anspruch 27, wobei das Gas eine $CO_2$-Laser-Mischung ist.

30. Selbstunterhaltendes Glimmentladungssystem nach einem der Ansprüche 27, 28 oder 29, wobei eine Ausdehnungskammer am Ausströmende des Entladeraums vorhanden ist, um den Elektronenstrom zu unterdrücken.

31. Selbstunterhaltendes Glimmentladungssystem nach Anspruch 27, wobei die erwähnten Elektroden-Elemente über ein Hitzeschutzschild in den Entladeraum vorstehen.

32. Selbstunterhaltendes Glimmentladungssystem nach einem der Ansprüche 27, 29 oder 31, wobei die Elektroden-Elemente beidendig offene Röhren sind, deren beide Enden mit einem der erwähnten Kanäle verbunden sind, wodurch ein Teil des erwähnten Elektrolyten durch diese Röhren zirkuliert.

33. Elektrodenanordnung nach Anspruch 13, wobei der erwähnte dielektrische Körper ein Parallelepiped ist, das erste und zweite Haupt-Außenflächen und ein Paar von Endflächen sowie ein weiteres Paar von Seitenflächen besitzt, die mit den Haupt-Außenflächen verbunden sind, wobei die Elektrodenenden über die erste Haupt-Außenfläche vorstehen, und weiterhin eine Hitzeschutzschild-Platte an dieser ersten Haupt-Außenfläche vorhanden ist, und weiterhin die Elektroden-Elemente sich vom Inneren des dielektrischen Körpers durch die Hitzeschutzschildplatte nach außen erstrecken.

34. Elektroden-Anordnung nach Anspruch 33, wobei der erwähnte Haupt-Auslaßkanal und die erwähnte Vielzahl von verzweigten Auslaßkanälen benachbart und im wesentlichen parallel zu einer der erwähnten Haupt-Außenflächen angeordnet sind, während der Haupt-Einlaßkanal und die erwähnte Vielzahl von abgezweigten Einlaßkanälen benachbart und im wesentlichen parallel zur anderen Haupt-Außenfläche angeordnet sind, und daß die erwähnten Querkanäle sich zwischen den verzweigten Einlaß- und den verzweigten Auslaßkanälen im wesentlichen senkrecht zu den Haupt-Außenflächen erstrecken, wodurch eine dreidimensionale Anordnung von Wasserkanälen geschaffen ist.

35. Elektroden-Anordnung nach Anspruch 12, wobei der erwähnte Haupt-Auslaßkanal und die erwähnte Vielzahl von verzweigten Auslaßkanälen im wesentlichen in einer ersten Ebene angeordnet sind, der erwähnte Haupt-Einlaßkanal und die erwähnte Vielzahl von verzweigten Einlaßkanälen im wesentlichen in einer zweiten Ebene angeordnet sind, und wobei die erwähnten Querkanäle sich zwischen den erwähnten verzweigten Einlaß- und verzweigten Auslaßkanälen erstrecken, wobei die erste und zweite Ebene leicht zueinander geneigt sind, um eine allmähliche Zunahme des Wasserabstandes zwischen den Elektroden-Elementen und den Neben-Sammelschienen in Richtung des gasabstromseitigen Teiles der erwähnten Elektroden-Anordnung zu bilden.

36. Verfahren zum Herstellen einer Elektroden-Anordnung nach Anspruch 33, das die folgenden Schritte umfaßt:
Bildung des dielektrischen Körpers (2) in der erforderlichen Größe und Form;
Bohren von Löchern von der ersten Haupt-Außenseite für die erwähnten Querkanäle (7);
Bohren von Löchern von der einen der erwähnten Seiten-Flächen für die erwähnten Haupt-Einlaß- (11) und -Auslaß (3) -Kanäle;
Bohren von Löchern von einer der Endflächen für die erwähnten verzweigten Einlaßkanäle (10), um sie mit dem erwähnten Haupteinlaßkanal und den erwähnten Querkanälen zu verbinden;
Bohren von Löchern von der anderen erwähnten End-Fläche für die erwähnten verzweigten Auslaßkanäle (6), um sie mit dem erwähnten Haupt-Auslaßkanal und den erwähnten Querkanälen zu verbinden;
Bohren von Löchern in der erwähnten zweiten Haupt-Außenfläche, um die erwähnten Haupteinlaß- und Auslaß-Kanäle mit äußeren Verbindungsanschlüssen zu verbinden;
Einsetzen der erwähnten Haupt-Sammelschiene (4) in einen der erwähnten Hauptkanäle und Einsetzen der erwähnten Neben-Sammelschienen (5) in die erwähnten zugehörigen verzweigten Kanäle (6), Verbinden der erwähnten Neben-Sammelschienen mit der erwähnten Haupt-Sammelschiene, Einsetzen von gummiartigen Rohrverschlüssen (9) in die erwähnten Querkanal-Löcher zwischen der ersten Haupt-Außenfläche und den erwähnten verzweigten Kanälen, die der ersten Haupt-Außenfläche benachbart sind;
Einsetzen der erwähnten Elektroden-Elemente (8) durch die erwähnten Gummi-Rohrverschlüsse in die erwähnten Querkanäle;
Verschließen der Eingänge der Löcher für die Haupt- und verzweigten Kanäle mit Plastikstangen (12, 18) und gummiartigen Rohrdichtungen (13, 19);

verschlußsicheres Anbringen der Verbindungsleitungen (15, 16) für den Ein- und Auslaß des Elektrolyten in der erwähnten zweiten Haupt-Außenfläche; und verschlußdichtes Anbringen der elektrischen Anschlußschiene (17) an der Haupt-Sammelschiene.

37. Verfahren nach Anspruch 36, wobei die gummiartigen Rohrverschlüsse durch ein passendes Verschlußmittel oder eine Abstufung oder eine Einkerbung in Einbaustellung zu halten sind.

38. Elektroden-Anordnung nach Anspruch 1, wobei die erwähnten Elektroden-Elemente und die elektrischen Stromleiter aus rostfreiem Stahl bestehen.

**Revendications**

1. Assemblage d'électrodes à auto-optimalisation pour un laser à gaz à grande puissance, comprenant:
   (a) un groupe d'éléments d'électrodes (8) conduisant l'énergie électrique, séparés physiquement et électriquement les uns des autres;
   (b) un corps diélectrique (2) résistant à la chaleur dans lequel lesdits éléments d'électrodes sont supportés, une extrémité desdits éléments d'électrodes dépassant dudit corps diélectrique;
   (c) un canal d'arrivée (11) destiné à transporter une solution aqueuse jusque dans et à travers ledit corps diélectrique;
   (d) un canal de sortie (3) destiné à transporter la solution aqueuse à travers et en sortie dudit corps diélectrique;
   (e) un groupe de canaux transversaux (7) dont le nombre correspond à celui des éléments d'électrodes, chaque canal transversal entourant au moins une partie de son électrode respective, chaque canal étant raccordé au canal d'arrivée et au canal de sortie, chacun desdits canaux transversaux isolant physiquement et électriquement une extrémité respective d'un élément d'électrode opposé à l'extrémité de l'élément d'électrode dépassant du corps diélectrique;
   (f) au moins un conducteur électrique (5) espacé des extrémités du groupe d'éléments d'électrodes opposés aux extrémités dépassant du corps diélectrique pour former une série d'entrefers, le conducteur étant utilisé pour distribuer l'énergie électrique vers le groupe d'éléments d'électrodes; et
   (g) des moyens destinés à transporter une solution aqueuse conduisant l'énergie électrique dans les canaux d'arrivée, transversaux et de sortie.

2. Assemblage d'électrodes selon la revendication 1, dans lequel lesdits éléments d'électrodes forment un réseau spatial dans deux directions dans le corps diélectrique.

3. Assemblage d'électrodes selon la revendication 2, dans lequel les éléments d'électrodes sont agencés sous la forme d'une grille parallèle aux faces larges du corps diélectrique.

4. Assemblage d'électrodes selon la revendication 1, dans lequel la largeur des entrefers entre les éléments d'électrodes et le conducteur dans la zone d'amont du gaz est inférieure à la largeur des entrefers entre les éléments d'électrodes et le conducteur à la zone d'aval du gaz.

5. Assemblage d'électrodes selon la revendication 1, dans lequel les éléments d'électrodes sont des tubes creux, une extrémité de chacun des tubes étant raccordée au canal d'entrée, l'extrémité opposée de chacun des tubes étant raccordée au canal de sortie.

6. Assemblage d'électrodes selon la revendication 5, dans lequel les tubes sont coudés et les extrémités des tubes coudés raccordées au canal d'arrivée se trouvent dans une rangée dans le corps diélectrique, et les extrémités des tubes coudés raccordées au canal de sortie se trouvent dans une seconde rangée dans le corps diélectrique.

7. Assemblage d'électrodes selon la revendication 5, dans lequel le canal de sortie est accompagné d'un groupe de canaux de branchement de sortie auxquels il est raccordé, dont la totalité est disposée sensiblement dans un premier plan, ledit canal d'arrivée est accompagné d'un groupe de canaux de branchement d'arrivée auxquels il est raccordé, dont la totalité est située sensiblement dans un second plan, les canaux transversaux s'étendant entre lesdits canaux de branchement d'arrivée et de branchement de sortie, lesdits premier et second plans étant inclinés l'un par rapport à l'autre pour former un accroissement progressif de entrefer d'eau entre les éléments d'électrodes et le conducteur dans la direction de la partie d'aval de gaz de l'assemblage d'électrodes.

8. Assemblage d'électrodes selon la revendication 1, dans lequel lesdits éléments d'électrodes sont disposés en rangées dans une première direction, en colonnes dans une deuxième direction, et chacun desdits éléments d'électrodes étant dans une troisième direction pour former ainsi un réseau tridimensionnel.

9. Assemblage d'électrodes selon l'une quelconque des revendications 1, 2 ou 3, dans lequel les éléments d'électrodes sont des tiges.

10. Assemblage d'électrodes selon l'une quelconque des revendications 1, 2 ou 3, dans lequel lesdits éléments d'électrodes sont des tubes ayant des extrémités dépassantes fermées.

11. Assemblage d'électrodes selon l'une quelconque des revendications 1, 2 ou 3, dans lequel lesdits éléments d'électrodes sont des tubes ouverts aux extrémités, chacune des extrémités de chaque tube étant raccordée à l'un desdits canaux de manière qu'une partie dudit électrolyte circule dans lesdits tubes.

12. Assemblage d'électrodes selon la revendication 1, dans lequel lesdits canaux comprennent:
(a) un canal principal d'arrivée et un canal principal de sortie;
(b) plusieurs canaux de branchement d'arrivée; et
(c) un nombre correspondant de canaux de branchement de sortie raccordés respectivement auxdits canaux principal d'arrivée et principal de sortie, plusieurs canaux transversaux étant raccordés entre chaque canal de branchement d'arrivée et le canal de branchement de sortie correspondant, un canal transversal correspondant à chaque élément d'électrode et une partie de chacun desdits éléments d'électrodes étant, située dans le canal transversal correspondant et disposée, par rapport à l'un desdits conducteurs électriques, de manière qu'il soit formé entre eux un entrefer de largeur prédéterminée par lequel l'électrolyte établit la résistance de charge demandée pour chaque élément d'électrode.

13. Assemblage d'électrodes selon la revendication 12, dans lequel lesdits conducteurs électriques comprennent une barre omnibus principale s'étendant longitudinalement à l'intérieur dudit canal principal de sortie et plusieurs barres omnibus secondaires, connectées électriquement à ladite barre omnibus principale, dont le nombre correspond audit groupe de canaux de branchement de sortie et s'étendant longitudinalement à l'intérieur de ceux-ci, chacun dedits éléments d'électrodes étant disposé par rapport à l'une desdites barres omnibus secondaires de façon qu'il soit formé entre eux l'un desdits entrefers.

14. Assemblage d'électrodes selon la revendication 13, dans lequel chaque élément d'électrode s'étend transversalement dans l'un desdits canaux de branchement d'arrivée et pénètre à travers lui dans l'un desdits canaux transversaux.

15. Assemblage d'électrodes selon la revendication 12, dans lequel lesdits conducteurs électriques comprennent une barre omnibus principale s'étendant longitudinalement à l'intérieur dudit canal principal d'arrivée et plusieurs barres omnibus secondaires, connectées électriquement à ladite barre omnibus principale, dont le nombre correspond audit groupe de canaux de branchement d'arrivée et s'étendant longitudinalement à l'intérieur de ceux-ci, chacun desdits éléments d'électrodes étant disposé par rapport à l'une desdites barres omnibus secondaires de façon qu'il soit formé entre eux l'un desdits entrefers.

16. Assemblage d'électrodes selon la revendication 15, dans lequel chaque élément d'électrode s'étend transversalement dans l'un desdits canaux de branchement de sortie et pénètre à travers celui-ci dans l'un desdits canaux transversaux.

17. Assemblage d'électrodes selon la revendication 13, dans lequel les largeurs desdits entrefers augmentent depuis les extrémités d'amont de gaz desdites barres omnibus secondaires jusqu'à leurs extrémités d'aval.

18. Assemblage d'électrodes selon l'une quelconque des revendications 12, 13 ou 14, dans lequel chacun desdits éléments d'électrodes est disposé par rapport à la barre omnibus secondaire correspondante de façon à établir un entrefer de résistance prédéterminée.

19. Assemblage d'électrodes selon l'une quelconque des revendications 12, 13 ou 14, dans lequel les canaux transversaux sont disposés de manière que le débit d'écoulement d'électrolyte dans chacun d'eux soit sensiblement le même.

20. Assemblage d'électrodes selon l'une quelconque des revendications 1, 2 ou 3, dans lequel ledit électrolyte est une solution aqueuse contenant du carbonate de potassium.

21. Assemblage d'électrodes selon l'une quelconque des revendications 12, 13 ou 14, dans lequel ledit électrolyte est une solution aqueuse contenant du carbonate de potassium.

22. Assemblage d'électrodes selon l'une quelconque des revendications 1, 2 ou 3, dans lequel ledit électrolyte est de l'eau du robinet.

23. Assemblage d'électrodes selon l'une quelconque des revendications 12, 13 ou 14, dans lequel ledit électrolyte est de l'eau du robinet.

24. Assemblage d'électrodes selon l'une quelconque des revendications 1, 2 ou 3, dans lequel lesdits éléments d'électrodes dépassent au-dessus d'une plaque d'écran thermique sur une distance dans la plage de 4 à 10 mm.

25. Assemblage d'électrodes selon l'une quelconque des revendications 12, 13 ou 14, dans lequel lesdits éléments d'électrodes dépassent d'une plaque d'écran thermique sur une distance dans la plage de 4 à 10 mm.

26. Assemblage d'électrodes selon l'une quelconque des revendications 12, 13 ou 14, dans lequel la direction d'écoulement de l'électrolyte au voisinage des éléments d'électrodes est telle que des bulles formées aux éléments d'électrodes, aux extrémités opposées à celles qui dépassent, soient évacuées vers le canal de sortie.

27. Système de décharge luminescente à courant continu, auto-entretenu, pour un laser à gaz à grande puissance, comprenant:

une électrode (2) de cathode et une électrode (22) d'anode, au moins l'une desdites électrodes de cathode et d'anode étant un assemblage d'électrodes comprenant

(a) un groupe d'éléments d'électrodes (8) conduisant l'énergie électrique, séparés physiquement et électriquement les uns des autres;

(b) un corps diélectrique (2) résistant à la chaleur dans lequel lesdits éléments d'électrodes sont supportés, une extrémité desdits éléments d'électrodes dépassant dudit corps diélectrique;

(c) un canal d'arrivée (11) destiné à transporter une solution aqueuse jusque dans et à travers ledit corps diélectrique;

(d) un canal de sortie (3) destiné à transporter la solution aqueuse à travers et en sortie dudit corps diélectrique;

(e) un groupe de canaux transversaux (7) dont le nombre correspond au groupe d'éléments d'électrodes, chaque canal transversal entourant au moins une partie de son électrode respective, chaque canal étant raccordé au canal d'arrivée et au canal de sortie, chacun desdits canaux transversaux isolant physiquement et électriquement une extrémité respective d'un élément d'électrode opposé à l'extrémité de l'élément d'électrode dépassant du corps diélectrique;

(f) au moins un conducteur électrique (5) espacé des extrémités du groupe d'éléments d'électrodes opposés aux extrémités dépassant du corps diélectrique pour former une série d'entrefers, le conducteur étant utilisé pour distribuer de l'énergie électrique vers le groupe d'éléments d'électrodes; et

(g) des moyens destinés à transporter une solution aqueuse conductrice de l'énergie électrique dans les canaux d'arrivée, transversaux et de sortie;

lesdites électrodes d'anode et de cathode s'étendant à distance l'une de l'autre pour définir entre elles un volume de décharge (35);

des moyens (45, 54, 55) destinés à produire un écoulement continu de gaz convenant à une action laser à travers ledit volume de décharge,

un système optique (56) comprenant un jeu de miroirs situés aux deux extrémités dudit volume de décharge,

des moyens destinés à amorcer et stabiliser la décharge luminescente dans ledit volume,

une alimentation entretenue en courant continu ayant des bornes de sortie positive et négative,

deux inductances (51) d'isolement d'impulsions, l'une des inductances d'isolement d'impulsions étant connectée électriquement entre la borne positive de l'alimentation en courant continu et l'anode, l'autre inductance d'isolement d'impulsions étant connectée électriquement entre la borne négative de l'alimentation en courant continu et la cathode,

un condensateur (52) connecté électriquement entre l'une des bornes de sortie d'un générateur d'impulsions (50) dudit système et l'une desdites électrodes, la seconde borne de sortie du générateur d'impulsions étant connectée électriquement à l'autre desdites électrodes.

28. Système de décharge luminescente auto-entretenu selon la revendication 27, dans lequel la fréquence de répétition d'impulsions du générateur d'impulsions est dans la plage de 1 à 5 kHz.

29. Système de décharge luminescente auto-entretenu selon la revendication 27, dans lequel le gaz est un mélange pour laser au $CO_2$.

30. Système de décharge luminescente auto-entretenu selon l'une quelconque des revendications 27, 28 ou 29, dans lequel une chambre d'expansion est placée sur le côté d'aval du volume de décharge pour supprimer la décharge irrégulière d'électrons.

31. Système de décharge luminescente auto-entretenu selon la revendication 27, dans lequel lesdits éléments d'électrodes dépassent au-delà d'un écran thermique jusque dans le volume de décharge.

32. Système de décharge luminescente auto-entretenu selon l'une quelconque des revendications 27, 29 ou 31, dans lequel lesdits éléments d'électrodes sont des tubes à extrémités ouvertes, les deux extrémités de chaque tube étant raccordées à l'un desdits canaux afin qu'une partie dudit électrolyte circule dans lesdits tubes.

33. Assemblage d'électrodes selon la revendication 13, dans lequel ledit bloc diélectrique est un parallélépipède ayant des première et seconde faces principales et deux faces extrêmes et deux faces latérales contiguës aux faces principales, les extrémités des électrodes dépassant à travers la première face principale, une plaque d'écran thermique étant placée à proximité immédiate de ladite première face principale, lesdits éléments d'électrodes s'étendant depuis l'intérieur dudit bloc diélectrique et à travers l'écran thermique.

34. Assemblage d'électrodes selon la revendication 33, dans lequel ledit canal principal de sortie et ledit groupe de canaux de branchement de sortie sont placés de façon à être adjacents et sensiblement parallèles à l'une desdites faces principales, ledit canal principal d'arrivée et ledit groupe de canaux de branchement d'arrivée sont placés de façon à être adjacents et sensiblement parallèles à l'autre desdites faces principales, et lesdits canaux transversaux s'étendent entre lesdits canaux de branchement d'arrivée et de branchement de sortie, à peu près perpendiculairement auxdites faces principales, de manière à former un réseau tridimensionnel de canaux à eau.

35. Assemblage d'électrodes selon la revendication 12, dans lequel ledit canal principal de sortie et ledit groupe de canaux de branchement de sortie sont placés sensiblement dans un premier plan, ledit canal principal d'arrivée et ledit groupe de canaux de branchement d'arrivée sont situés sensiblement dans un second plan, lesdits canaux transversaux s'étendent entre lesdits canaux de branchement d'arrivée et de branchement de sortie, lesdits premier et second plans sont légèrement inclinés l'un par rapport à l'autre de façon à former un accroissement progressif d'entrefers à eau entre les éléments d'électrodes et les barres omnibus secondaires vers la partie d'aval de gaz dudit assemblage d'électrodes.

36. Procédé de fabrication d'un assemblage d'électrodes selon la revendication 33, comprenant les étapes qui consistent:
à former le bloc diélectrique (2) à la dimension et à la configuration demandées;
à percer des trous dans ladite première face principale pour lesdits canaux transversaux (7);
à percer des trous dans l'une desdites faces latérales pour lesdits canaux principaux d'artrivée (11) et de sortie (3);
à percer des trous dans l'une desdites faces extrêmes pour lesdits canaux de branchement d'arrivée (10) afin de les raccorder audit canal principal d'arrivée et auxdits canaux transversaux;
à percer des trous dans l'autre desdites faces extrêmes pour lesdits canaux de branchement de sortie (6) afin de les raccorder audit canal principal de sortie et auxdits canaux transversaux;
à percer deux trous dans ladite seconde face principale pour un raccordement avec lesdits canaux principaux d'arrivée et de sortie, respectivement, pour des raccordements extérieurs;
à insérer ladite barre omnibus principale (4) dans l'un desdits canaux principaux et lesdites barres omnibus secondaires (5) dans lesdits canaux de branchement (6) correspondants, à raccorder lesdites barres omnibus secondaires à ladite barre omnibus principale, à insérer des joints tubulaires (9) en caoutchouc dans lesdits trous des canaux transversaux entre ladite première face principale et lesdits canaux de branchement adjacents à ladite première face principale;
à insérer lesdits éléments d'électrodes (8) à travers lesdits joints tubulaires en caoutchouc dans lesdits canaux transversaux;
à boucher les entrées des trous pour les canaux principaux et de branchement avec des tiges (12, 18) de matière plastique et des joints tubulaires (13, 19) en caoutchouc;
à fixer des connecteurs scellés (15, 16) pour l'arrivée et la sortie d'électrolyte dans ladite seconde face principale; et
à fixer une broche électrique scellée (17) connectée à ladite barre omnibus principale.

37. Procédé selon la revendication 36, dans lequel lesdits joints tubulaires en caoutchouc sont maintenus en place par une pâte d'étanchéité ou un épaulement ou une encoche convenable.

38. Assemblage d'électrodes selon la revendication 1, dans lequel lesdits éléments d'électrodes et lesdits conducteurs électriques sont composés d'acier inoxydable.

FIG.1

WATER

38

2

14

8

−D.C. & PULSE

35

8

WATER

22

14

39

+ D.C.& PULSE

FIG. 1A

EP 0 225 413 B1

DISCHARGE V-I CHARACTERISTIC

FIG. 2

FIG. 3

FIG.4A

FIG.4

FIG. 4B

FIG. 5

EP 0 225 413 B1